# EUROPÄISCHE PATENTSCHRIFT

(11) **EP 1 685 946 B1**
(45) Veröffentlichungstag und Bekanntmachung des Hinweises auf die Patenterteilung: **01.12.2010**
(21) Anmeldenummer: 05001664.1
(22) Anmeldetag: 27.01.2005
(51) Int. Cl.: B29C 67/24, B29C 53/58, B29D 23/00

(54) **Verfahren zur Herstellung eines Schlauches aus thermoplastischem Polyurethan**
Process for manufacturing a hose from thermoplastic polyurethane
Procédé de fabrication d'un tuyau à base de polyuréthane thermoplastique

(43) Veröffentlichungstag der Anmeldung: 02.08.2006
(73) Patentinhaber: NORRES Schlauchtechnik GmbH & Co. KG, 45881 Gelsenkirchen (DE)
(72) Erfinder:
(74) Vertreter: Rohmann, Michael

(56) Entgegenhaltungen:
- EP-A- 0 100 085
- EP-A- 0 417 581
- EP-A- 0 523 509
- EP-A- 0 541 498
- EP-A- 0 714 950
- EP-A- 0 922 719
- WO-A-01/06163
- DE-A1- 4 115 508
- DE-A1- 19 848 172
- GB-A- 2 347 933
- US-A1- 2002 003 003
- US-A1- 2002 112 770

## Beschreibung

Die Erfindung betrifft ein Verfahren zur Herstellung eines Schlauches aus thermoplastischem Polyurethan, wobei dem Polyurethan-Ausgangsstoff zumindest ein Diisocyanat zugegeben wird.

Schläuche aus Polyurethan haben sich grundsätzlich bewährt und zwar im Hinblick auf ihre Festigkeit, Verschleißbeständigkeit, chemische Beständigkeit und UV-Beständigkeit. Allerdings tritt bei diesen bekannten Polyurethanschläuchen mit steigender Temperatur bereits ab 90 °C und relativ deutlich bei Temperaturen ab 120 °C ein Festigkeitsverlust auf. Dieser Festigkeitsverlust kann bei Überdruckanwendungen dieser Schläuche zum Platzen der Schläuche und bei Unterdruckanwendungen zum Kollabieren der Schläuche führen. Fernerhin macht sich bei vielen bekannten Polyurethanschläuchen bei längerer Kraft- und Druckeinwirkung die typische Kriecheigenschaft der Polyurethane bemerkbar und dadurch kommt es zu nachteilhaften Beeinträchtigungen der Schlauchwandungen. Aus diesem Grunde eignen sich diese bekannten Polyurethanschläuche weniger zur Verwendung mit Verschraubungen und Anschlusselementen, beispielsweise mit Press- oder Schaleneinband, die insbesondere bei Gummischläuchen zum Einsatz kommen. Gummischläuche weisen nämlich im Gegensatz zu den bekannten Polyurethanschläuchen eine bessere Festigkeit unter Wärmeeinfluss, d.h. eine bessere Wärmeformbeständigkeit und deutlich geringere Kriecheigenschaften auf, weswegen beispielsweise Press- und Schalenverschraubungen auf ihnen besser halten.

Im Rahmen der WO 01/06163 A1 wird ein derartiges Verfahren beschrieben. Hier geht es nur allgemein um die Schlauchherstellung aus Polyurethan unter Zusatz von beispielsweise Diisocyanat als Vernetzungsmittel. Details des produzierten Schlauches bleiben offen.

Ähnliches gilt für die ebenfalls gattungsbildende DE 41 15 508 A1. Diese beschreibt ein Verfahren zur Herstellung von hochmolekularen thermoplastisch verarbeitbaren Polyurethanelastomeren mit verbesserter Hydrolysebeständigkeit und verbesserter Verschleißfestigkeit. Dazu wird den konventionell thermoplastisch verarbeitbaren Polyurethanelastomeren während einer thermoplastischen Verarbeitung organisches Diisocyanat zugesetzt.

Ungeachtet dessen beschäftigt sich die DE 198 48 172 A1 mit einem Verfahren zur Herstellung eines Wickelschlauches aus thermoplastischem Kunststoff. Zu diesem Zweck wird wenigstens ein Kunststoffstreifen mit einer Armierung spiralförmig zu dem Wickelschlauch kontinuierlich gewickelt.

Ähnlich geht die EP 0 523 509 A2 vor, welche sich mit der Herstellung von gewickelten Rohren befasst. Hier wird ein Polyurethan-Reaktionsgemisch zur Bildung eines Kunststoffes auf einen linear bewegten Trägerfolienstreifen aufgegossen. Zusätzlich ist ein Verstärkungsband aus Glasfasergewebe vorgesehen.

Der Erfindung liegt das technische Problem zugrunde, ein derartiges Verfahren anzugeben, mit dem Schläuche mit beachtlich verbesserten mechanischen Eigenschaften und verbesserten chemischen Eigenschaften hergestellt werden können und insbesondere über eine hohe Formstabilität auch bei hohen Temperaturen verfügen.

Zur Lösung dieses technischen Problems lehrt die Erfindung ein Verfahren zur Herstellung eines Wickelschlauches aus Polyurethan, wobei
- einem thermoplastischen Polyurethan-Ausgangsstoff zumindest ein Diisocyanat zugegeben wird, und
- wobei aus dem auf diese Weise modifizierten Polyurethan ein Kunststoffstreifen extrudiert wird und
- der extrudierte Kunststoffstreifen wendelförmig zu einem Wickelschlauch gewickelt wird.

Der Herstellung des Wickelschlauches kommt im Rahmen des erfindungsgemäßen Verfahrens ganz besondere erfindungserhebliche Bedeutung zu.

Als thermoplastischer Polyurethan-Ausgangsstoff wird im Rahmen des erfindungsgemäßen Verfahrens sehr bevorzugt ein thermoplastisches PolyesterPolyurethan und/oder ein thermoplastisches Polyether-Polyurethan eingesetzt. - Polyurethan-Ausgansstoff meint im Rahmen der Erfindung zunächst insbesondere ein fertiges Polyurethan, dass durch Polyaddition aus 2- oder höherwertigen Alkoholen und Isocyanaten entstandenen ist. Polyurethan-Ausgangsstoff meint weiterhin insbesondere ein nicht oder nur wenig vernetztes Polyurethan. Es liegt im Rahmen der Erfindung, dass maximal 30 Gew.-% des Polyurethan-Ausgangsstoffes vernetzt sind, vorzugsweise weniger als 25 Gew.-%, bevorzugt weniger als 20 Gew.-% und sehr bevorzugt weniger als 10 Gew.-% des Polyurethan-Ausgangsstoffes.

Nach besonders bevorzugter Ausführungsform, der im Rahmen der Erfindung ganz besondere Bedeutung zukommt, wird das Diisocyanat bezogen auf die Masse des Polyurethan-Ausgangsstoffes in einer Menge von 0,2 bis 10 Gew.%, zweckmäßigerweise 0,2 bis 5 Gew.-%, vorzugsweise 0,3 bis 4 Gew.-%, und bevorzugt 0,5 bis 3,5 Gew.-% dem Polyurethan zugegeben. Besonders bevorzugt wird das Diisocyanat bezogen auf die Masse des Polyurethan-Ausgangsstoffes in einer Menge 1 bis 3 Gew.-%, vorzugsweise 1,5 bis 3 Gew.-% dem Polyurethan zugegeben. Die vorstehend jeweils angegebene Menge Diisocyanat bezogen auf die Polyurethan-Masse meint jeweils 100 Gew.-% Polyurethan und zusätzlich den Gew.-% Anteil Diisocyanat, d.h. beispielsweise zusätzlich 5 Gew.-% Diisocyanat so dass sich insgesamt 105 Gew.-% ergeben würden. Die vorstehend angegebenen Mengen an Diisocyanat haben sich insbesondere im Hinblick auf verbesserte mechanische Eigenschaften der bevorzugt hergestellten Wickelschläuche aus Polyurethan bewährt, die einen ganz besonderen Aufbau und daher ganz spezielle Eigenschaften aufweisen. Es hat sich als besonders vorteilhaft herausgestellt, Diphenylmethan-4,4'-diisocyanat (MDI) als Diisocyanat einzusetzen. Nach einer anderen bevorzugten Ausführungsform wird ein Toluylendiisocyanat (TDI) als Diisocyanat verwendet. Diese vorstehend genannten bevorzugten Diisocyanate haben sich insbesondere für die Herstellung von Wickelschläuchen bewährt. Es liegt im Rahmen der Erfindung, dass das Diisocyanat mit weiteren Additiven gemischt ist und dass diese Mischung dem Polyurethan-Ausgangsstoff zugesetzt wird.

Nach sehr bevorzugter Ausführungsform, der im Rahmen der Erfindung besondere Bedeutung zukommt, wird der Polyurethan-Ausgangsstoff in Granulatform eingesetzt. Der Polyurethan-Ausgangsstoff, vorzugsweise das Polyurethan-Granulat wird möglichst vollständig mit dem Diisocyanat benetzt.

Nach sehr bevorzugter Ausführungsform wird das Diisocyanat dem Polyurethan-Ausgangsstoff der vorzugweise in Granulatform vorliegt in einem Schneckenextruder zugegeben. Vorzugsweise erfolgt die Zugabe des Diisocyanates in der für das Polyurethan-Granulat bestimmten Einzugzone des Schneckenextruders. Der Schneckenextruder ist bevorzugt ein Einschneckenextruder. Es hat sich bewährt, flüssiges Diisocyanat drucklos mit Hilfe einer Zahnradpumpe zuzugeben und zwar vorzugsweise in der Einzugszone für das Polyurethan-Granulat. Zweckmäßigerweise wird ein Schneckenzylinder mit einer genuteten Einzugszone für das Granulat verwendet und vorzugsweise wird die Einzugszone temperiert bzw. beheizt. Bevorzugt wird ein Schneckenextruder mit einer Bariereschnecke mit Mischteil eingesetzt. Es liegt im Rahmen der Erfindung, dass das Verfahren mit der Maßgabe geführt wird und dass insbesondere ein Schneckenextruder mit der Maßgabe ausgewählt wird, dass eine homogene Schmelze im Extruder erhalten wird, so dass eine gleichmäßige Verteilung des Diisocyanates resultiert. Auf diese Weise erhält man in vorteilhafter Weise sehr reproduzierbare Materialeigenschaften des erfindungsgemäß hergestellten Schlauches, vorzugsweise Wickelschlauches.

Bei dem für die Herstellung eines erfindungsgemäßen Wickelschlauches extrudierten Kunststoffstreifen kann es sich um einen Folienstreifen aus thermoplastischem Kunststoff oder um einen Profilstreifen aus thermoplastischem Kunststoff handeln. In den Kunststoffstreifen kann ein Gewebe integriert sein. Nach einer Ausführungsform wird der extrudierte Kunststoffstreifen nach der Extrusion einer thermischen Behandlung unterzogen, beispielsweise durch eine mit temperiertem Wasser gefüllte Rinne geleitet. Es liegt auch im Rahmen der Erfindung, dass mehrere verschiedene Kunststoffstreifen aus modifiziertem Polyurethan zu einem Wickelschlauch aufgewickelt werden. Bei dem kontinuierlichen Wickeln werden zweckmäßigerweise die Längskantenabschnitte benachbarter Wendelwicklungen des Kunststoffstreifens bzw. der Kunststoffstreifen überlappend miteinander verbunden.

Nach besonders bevorzugter Ausführungsform der Erfindung werden Längskantenabschnitte benachbarter Wendelwicklungen des Kunststoffstreifens oder der Kunststoffstreifen durch Einbringen eines schmelzflüssigen Zusatzkunststoffes zwischen den einander zugeordneten Längskantenabschnitten stoffschlüssig miteinander verschweißt. Im Rahmen des wendelförmigen Wickelns des Kunststoffstreifens wird zweckmäßigerweise der schmelzflüssige Zusatzkunststoff auf einen ersten Längskantenabschnitt aufgetragen und unmittelbar anschließend wird der zweite zugeordnete Längskantenabschnitt auf diesen ersten Längskantenabschnitt bzw. auf den schmelzflüssigen Zusatzkunststoff aufgebracht bzw. aufgedrückt. Nach einer Ausführungsform der Erfindung besteht der Zusatzkunststoff aus einem thermoplastischen Kunststoff, aus dem auch der Kunststoffstreifen besteht. Nach einer anderen Ausführungsform der Erfindung kann der Zusatzkunststoff jedoch auch aus einem von dem Material des Kunststoffstreifens verschiedenen thermoplastischen Kunststoff bestehen.

Eine sehr bevorzugte Ausführungsform der Erfindung ist dadurch gekennzeichnet, dass als schmelzflüssiger Zusatzkunststoff ebenfalls ein durch nachträgliche Zugabe zumindest eines Diisocyanates modifiziertes Polyurethan eingesetzt wird. Die auf diese Weise hergestellten Wickelschläuche zeichnen sich durch besonders vorteilhafte mechanische Eigenschaften aus. Es wird eine sehr feste Verbindung der wendelförmig gewickelten Kunststoffstreifen erreicht und der resultierende Wickelschlauch zeichnet sich durch eine beachtliche Festigkeit bzw. Stabilität insbesondere unter mechanischen Beanspruchungen aus. - Besonders bevorzugt wird auch bei der Erzeugung des schmelzflüssigen Zusatzkunststoffes aus modifiziertem Polyurethan so verfahren, wie bei der Erzeugung des zu wickelnden Kunststoffstreifens aus modifiziertem Polyurethan. Mit anderen Worten werden die oben beschriebenen Ausführungsformen, die den Polyurethan-Ausgangsstoff, die Menge und/oder Art des zugesetzten Diisocyanates, den Extruder, die Zuführung zum Extruder und die Verarbeitung im Extruder betreffen, vorzugsweise auch bei der Erzeugung des modifizierten Polyurethans für den schmelzflüssigen Zusatzkunststoff eingesetzt. Nach besonders bevorzugter Ausführungsform der Erfindung entspricht das modifizierte Polyurethan des zu wickelnden Kunststoffstreifens dem modifizierten Polyurethan, aus dem der schmelzflüssige Zusatzkunststoff besteht. - Grundsätzlich liegt es im Übrigen auch im Rahmen der Erfindung, dass die Längskantenabschnitte benachbarter Wendelwicklungen des Kunststoffstreifens bzw. der Kunststoffstreifen durch Heißluftverschweißen der überlappenden Längskantenabschnitte miteinander verbunden werden.

Gemäß einer sehr bevorzugten Ausführungsform der Erfindung wird zumindest ein Kunststoffstreifen mit einer Armierung wendelförmig zu dem Wickelschlauch kontinuierlich gewickelt. Die Armierung kann zwischen den Längskantenabschnitten eingebracht werden und zwischen den überlappenden Längskantenabschnitten eingeschweißt werden. Gemäß einer anderen Ausführungsvariante wird mit einer in dem Kunststoff des Kunststoffstreifens eingekapselten Armierung gearbeitet. Die Armierung besteht vorzugsweise aus einem Metalldraht oder aus einem Kunststoffmonofilament. Gegenstand der Erfindung ist im Übrigen auch ein Schlauch, insbesondere ein Wickelschlauch, der aus einem erfindungsgemäß modifizierten Polyurethan hergestellt ist.

Der Erfindung liegt die Erkenntnis zugrunde, dass bei Verwirklichung der erfindungsgemäßen Verfahrensmerkmale Wickelschläuche aus Polyurethan mit hervorragenden mechanischen Eigenschaften und auch vorteilhaften chemischen Eigenschaften hergestellt werden können. Durch die erfindungsgemäße Zugabe des Diisocyanats wird der bereits fertiggestellte und einsatzfähige Polyurethan-Ausgangsstoff vernetzt. Grundsätzlich ist es bekannt, dass Polyurethane im Zuge ihrer Herstellung bei Isocyanat-Überschuss vernetzen können. Im vorliegenden erfindungsgemäßen Fall hat sich aber die nachträgliche Zugabe von Diisocyanat zu dem bereits fertigen Polyurethan-Ausgangsstoff unter den erfindungsgemäßen speziellen Bedingungen bewährt. Diese Verfahrensweise führt vor allem bei den vorzugsweise hergestellten Wickelschläuchen zu ganz besonders vorteilhaften und überraschenden Eigenschaften. Wickelschläuche aus thermoplastischem Kunststoff haben einen besonderen Aufbau und daraus resultierende spezielle Eigenschaften, insbesondere spezielle mechanische Eigenschaften. Die erfindungsgemäß hergestellten Schläuche weisen vor allem eine überraschend hohe Beständigkeit bzw. Formbeständigkeit bei höheren Temperaturen auf, insbesondere auch bei Temperaturen über 120 °C. So sind die erfindungsgemäßen Schläuche bei Beaufschlagung mit relativ hohen Temperaturen auch unter höherem Druck ohne Weiteres beständig. Die bislang bekannten Schläuche bzw. Wickelschläuche aus Polyurethan weisen eine nachteilhaft rasche Wärmehalterung bei erhöhten Temperaturen auf, die einen Festigkeitsverlust zur Folge hat. Die erfindungsgemäß hergestellten Schläuche weisen dagegen ein beachtlich verbessertes Wärmehalterungsverhalten auf. Aufgrund der nachteilhaften Kriecheigenschaften sind die bekannten Polyurethan-Schläuche zur Verwendung mit Verschraubungen und Anschlusselementen - wie sie bei Gummischläuchen zum Einsatz kommen - nur wenig geeignet. Dagegen können die erfindungsgemäßen Schläuche problemlos mit solchen Verschraubungen und Anschlusselementen, beispielsweise mit Press- oder Schaleneinband, eingesetzt werden.
- Im Ergebnis zeichnen sich die erfindungsgemäß hergestellten Polyurethan-Schläuche insbesondere die erfindungsgemäßen Polyurethan-Wickelschläuche durch eine überraschend hohe mechanische Widerstandsfähigkeit aus sowie auch durch eine gute chemische Beständigkeit.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines Teils einer Vorrichtung zur Durchführung des erfindungsgemäßen Verfahrens,
- Fig. 2: eine perspektivische Ansicht eines weiteren Teils der Vorrichtung zur Durchführung des erfindungsgemäßen Verfahrens,
- Fig. 3.: einen Schnitt durch den Verbindungsbereich des gewickelten Kunststoffstreifens,
- Fig. 4: den Gegenstand nach Fig. 3 in einer weiteren Ausführungsform und
- Fig. 5: den Gegenstand gemäß Fig. 3 in einer zusätzlichen Ausführungsform.

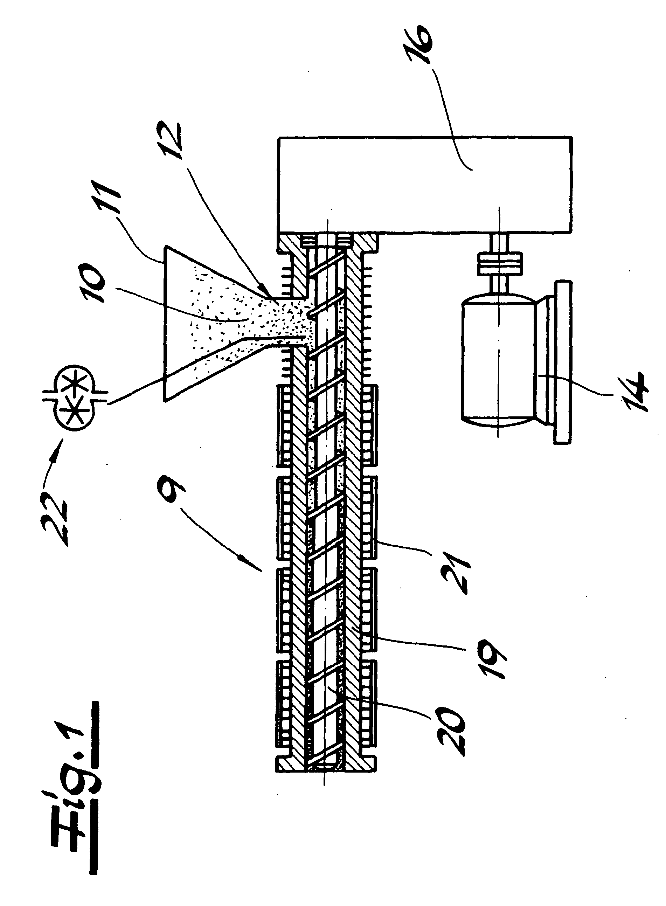

Die Fig. 1 zeigt einen ersten Teil einer Vorrichtung zur Herstellung eines erfindungsgemäßen Wickelschlauches 1 aus thermoplastischem Polyurethan. Hier ist ein Einschneckenextruder 9 dargestellt, mit dem für die Extrusion eines Kunststoffstreifens 2 eine Polyurethanschmelze erzeugt wird und zwar aus Polyurethan-Ausgangsstoff in Form von Granulat 10, das über einen Trichter 11 dem Extruder in der Einzugszone 12 aufgegeben wird. Der Einschneckenextruder 9 weist in üblicher Weise einen Motor 14, ein Getriebe 16 sowie Schneckenzylinder 19 und eine in dem Schneckenzylinder 19 aufgenommene Schnecke 20 auf. Vorzugsweise und im Ausführungsbeispiel wird der Einschneckenextruder 9 mit am Schneckenzylinder 19 angeordneten Heizmanschetten 21 temperiert bzw. beheizt.

Erfindungsgemäß wird dem granulatförmigen Polyurethan-Ausgangsstoff ein Diisocyanat zugegeben und zwar im Ausführungsbeispiel über eine als Zahnradpumpe 22 ausgeführte Dosiervorrichtung. In der Fig. 1 ist erkennbar, dass nach sehr bevorzugter Ausführungsform der Erfindung das Diisocyanat in der Einzugszone 12 des Granulates 10 zugefügt wird. Es liegt dabei im Rahmen der Erfindung, dass das Diisocyanat dem noch nicht schmelzflüssigen Granulat 10 zugegeben wird. Es wird dafür Sorge getragen, dass eine möglichst vollständige Benetzung des Granulates mit dem flüssigen Diisocyanat erfolgt. Es kann sich dabei um eine flüssige Mischung handeln, die neben Diisocyanat weitere Additive aufweist. In dem Einschneckenextruder 9 wird dann eine Schmelze aus dem mit Diisocyanat modifizierten Polyurethan hergestellt und aus dieser Kunststoffschmelze wird in nicht näher dargestellter Weise ein Kunststoffstreifen 2 für die Herstellung des Wickelschlauches 1 extrudiert.

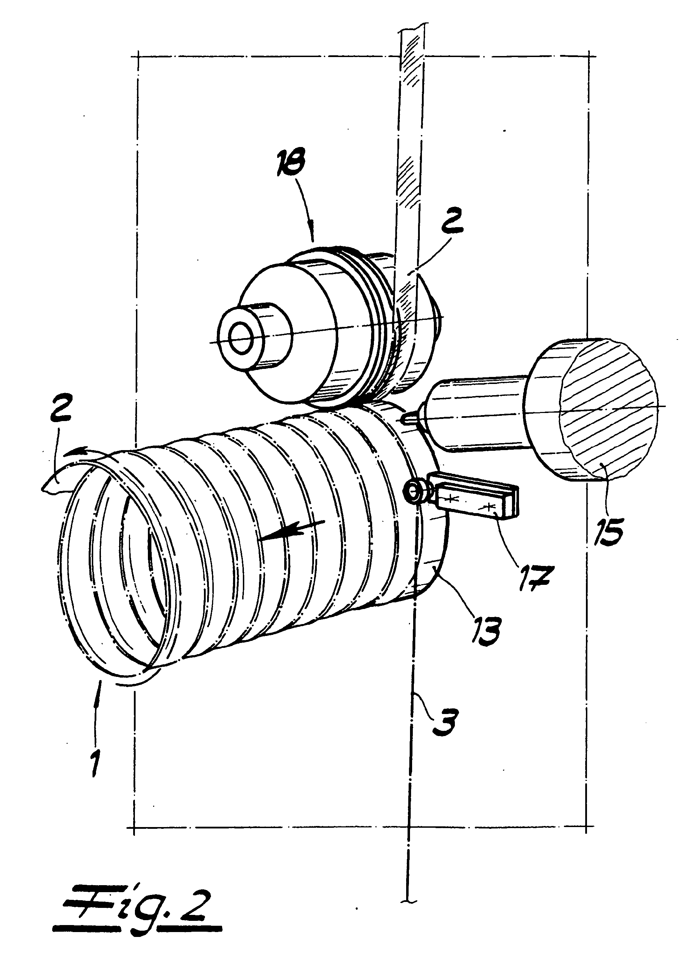

Fig. 2 zeigt einen weiteren Teil der Vorrichtung für die Herstellung eines Wickelschlauches 1. Der Kunststoffstreifen 2 wird hier kontinuierlich zugeführt und auf den Kern 13 wendelförmig zu dem Wickelschlauch 1 aufgewickelt. Der Wickelschlauch 1 bewegt sich aufgrund des kontinuierlichen Wickelns in Richtung des ausgezogenen Pfeiles. Bei der Ausführungsform gemäß Fig. 2 wird mit einem Schweißextruder 15 ein schmelzflüssiger Zusatzkunststoff 8 erzeugt und zwischen zugeordneten Längskantenabschnitten 4, 5 des Kunststoffstreifens 2 eingebracht. Es liegt im Rahmen der Erfindung, dass es sich bei dem schmelzflüssigen Zusatzkunststoff 8 ebenfalls um ein durch Zugabe eines Diisocyanates modifiziertes Polyurethan handelt. Insoweit kann vorzugsweise für den Schweißextruder 15 eine in Figur 1 dargestellte Vorrichtung eingesetzt werden. Zweckmäßigerweise wird auch bei der Erzeugung bzw. Extrusion des schmelzflüssigen Zusatzkunststoffes 8 unter den Bedingungen wie bei der Erzeugung bzw. Extrusion des Kunststoffstreifens 2 gearbeitet.

Im Ausführungsbeispiel nach Figur 2 wird gleichzeitig über eine zweite Zuführungseinrichtung 17 eine im Ausführungsbeispiel als Metalldraht ausgebildete Armierung 3 kontinuierlich zugeführt und zwischen den überlappenden Längskantenabschnitten 4, 5 des Kunststoffstreifens 2 eingeschweißt. In der Fig. 2 ist fernerhin eine Druckwalzenanordnung 18 erkennbar, mit der die überlappenden Längskantenabschnitte 4, 5 nach Einbringen des schmelzflüssigen Zusatzkunststoffes 8 beaufschlagt werden, um ein undefiniertes Austreten des schmelzflüssigen Zusatzkunststoffes 8 aus dem Überlappungsbereich der Längskantenabschnitte 4, 5 zu vermeiden.

Gemäß einer weiteren sehr bevorzugten Ausführungsform der Erfindung ist die Oberfläche des Kerns 13 mit der Maßgabe eingerichtet, dass der Kunststoffstreifen 2 in reibschlüssigen Kontakt mit der Oberfläche des Kerns 13 kommt. Dazu ist die Oberfläche des Kerns 13 profiliert, vorzugsweise gerändelt ausgeführt und/oder die Oberfläche des Kerns 13 weist eine Beschichtung auf, insbesondere eine Beschichtung aus einem Elastomer, die den reibschlüssigen Kontakt ermöglicht. Wenn der Kern 13 nach einer Ausführungsform der Erfindung eine Rändelung aufweist, sind zweckmäßigerweise Riefen vorhanden, die in Richtung der Wickelkernlängsachse verlaufen oder im Wesentlichen parallel zur Wickelkernlängsachse verlaufen. Wenn die Oberfläche des Kerns 13 in der beschriebenen Weise eingerichtet wird, ist die in Fig. 2 dargestellte Druckwalzenanordnung 18 grundsätzlich nicht erforderlich. Die Ausführungsform mit der besonderen Ausgestaltung der Oberfläche des Kerns 13 hat sich insbesondere bei Wickelschläuchen aus dem erfindungsgemäß modifizierten Polyurethan bewährt. Die auf diese Weise hergestellten Wickelschläuche zeichnen sich durch ganz überragende mechanische Eigenschaften aus.

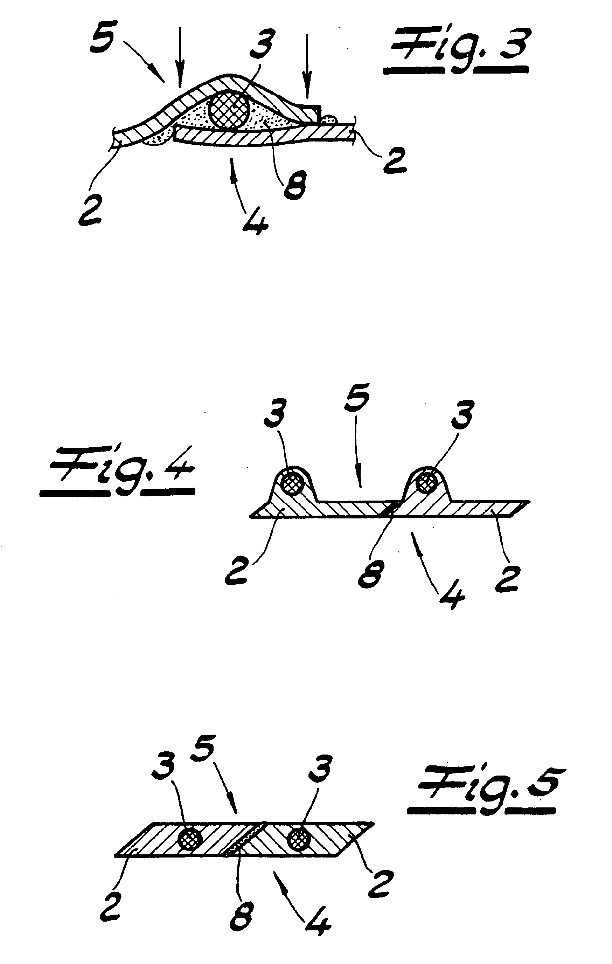

In Fig. 3 ist der Verbindungsbereich zwischen zwei Längskantenabschnitten 4, 5 des Kunststoffstreifens 2 dargestellt. Die hier dargestellte Verbindung wurde mit einer Vorrichtung gemäß Fig. 2 hergestellt, bei der also schmelzflüssiger Zusatzkunststoff 8 zwischen den überlappenden Längskantenabschnitten 4, 5 eingebracht ist. Außerdem befindet sich in diesem Verbindungsbereich auch die Armierung 3, die im Ausführungsbeispiel nach Fig. 3 als Metalldraht, beispielsweise als Stahldraht ausgeführt sein mag.

Die Fig. 4 zeigt eine Ausführungsform eines erfindungsgemäßen Wickelschlauches, bei der die Armierung 3 bereits im Kunststoffstreifen 2 vorliegt und hier von dem Kunststoff vollständig umgeben ist. Die Innenseite dieses Wickelschlauches 1 ist glatt ausgeführt, während die Außenseite durch die Armierung 3 hervorgerufene Wellen aufweist. Zusätzlich zu der Armierung 3 könnte in den Kunststoffstreifen 2 der Fig. 4 auch noch eine nicht dargestellte Erdungslitze integriert sein.

Auch im Ausführungsbeispiel nach Fig. 5 ist die Armierung 3 bereits in den Kunststoffstreifen 2 integriert. Der Wickelschlauch 1 gemäß dieser Ausführungsform ist sowohl an seiner Innenseite als auch an seiner Außenseite glatt ausgeführt. - Wie oben bereits dargelegt, kann die Armierung 3 ein Metalldraht, beispielsweise Stahldraht sein oder aber auch z. B. eine Hartkunststoffwendel. In den Kunststoffstreifen 2 könnte weiterhin auch ein nicht dargestelltes Gewebe als Armierung 3 integriert sein. Fernerhin könnte der Wickelschlauch 1 von einer Ummantelung bzw. einer Umflechtung umgeben sein, beispielsweise in Form eines Gewebes.

Wie weiter oben bereits dargelegt weisen die aus dem modifizierten Polyurethan hergestellten Wickelschläuche 1 ganz beachtlich verbesserte mechanische Eigenschaften auf. Es wurden Untersuchungen an einem Wickelschlauch 1 mit einer Ausgestaltung gemäß Fig. 4 durchgeführt. Dieser Wickelschlauch wies einen Innendurchmesser von 50 mm sowie eine Wandungsstärke (Kunststoffstreifen 2) von 1,5 mm auf. Die Armierung 3 war als Federstahldraht mit einem Durchmesser von 1,5 mm ausgebildet. Die Steigung des Wickelschlauches (Draht-Draht) betrug 13,5 mm.

Es wurde ein erstes Muster eines Wickelschlauches mit den vorstehenden Eigenschaften angefertigt, dessen Wandung aus einem thermoplastischen Polyester-Polyurethan mit einer Härte von 78 Shore A bestand. Weiterhin wurde ein zweites Muster aus dem vorgenannten Kunststoff angefertigt, wobei das Polyester-Polyurethan hier aber mit etwa 2 Gew.-% Diphenylmethan-4,4'-diisocyanat modifiziert wurde. Bei einem dritten Muster wurde das Polyester-Polyurethan der vorstehend genannten Härte mit ca. 3 Gew.-% Diphenylmethan-4,4'-diisocyanat modifiziert.

Mit den drei Mustern wurden Druckprüfungen gemäß EN ISO 1402 mit temperiertem Wasser von 90 °C als Prüfmedium durchgeführt. Für das erste Muster ergab sich ein Berstdruck von 1,2 bar, während man für das zweite Muster einen wesentlich höheren Berstdruck von 2,6 bar messen konnte und für das dritte Muster einen Berstdruck von 2,4 bar.

Weiterhin wurde das Dehnungsverhalten der drei Muster bei 20 °C und einem Betriebsdruck von 2,45 bar gemessen. Für das erste Muster ergab sich eine Dehnung in axialer Richtung von ca. 17,5%. Dagegen ergab sich für das zweite Muster lediglich eine Dehnung in axialer Richtung von 11,5% und für das dritte Muster eine Dehnung in axialer Richtung von ca. 11 %.

Fernerhin wurde das Dehnungsverhalten der drei Muster bei 90 °C und einem Überdruck von 0,735 bar untersucht. Für das erste Muster wurde eine Dehnung in axialer Richtung von ca. 16% gemessen. Dagegen wurde für das zweite Muster lediglich eine Dehnung in axialer Richtung von ca. 6% und für das dritte Muster eine entsprechende Dehnung von ca. 6,5% erhalten.

Die vorgenannten Untersuchungen zeigen, dass die aus dem modifizierten thermoplastischen Polyurethan gefertigten Wickelschläuche wesentlich bessere mechanische Eigenschaften aufweisen als Wickelschläuche aus unmodifizierten Polyurethanen.

## Patentansprüche

1. Verfahren zur Herstellung eines Wickelschlauches (1) aus Polyurethan, wobei
- einem thermoplastischen Polyurethan-Ausgangsstoff zumindest ein Diisocyanat zugegeben wird,
- wobei aus dem auf diese Weise modifizierten Polyurethan ein Kunststoffstreifen (2) extrudiert wird und
- der extrudierte Kunststoffstreifen (2) wendelförmig zu einem Wickelschlauch (1) gewickelt wird.

2. Verfahren nach Anspruch 1, wobei das Diisocyanat bezogen auf die Masse des Polyurethan-Ausgangsstoffes in einer Menge von 0,2 bis 10 Gew.-%, zweckmäßigerweise 0,2 bis 5 Gew.-%, vorzugsweise 0,3 bis 4 Gew.-%, bevorzugt 0,5 bis 3,5 Gew.-% dem Polyurethan zugegeben wird.

3. Verfahren nach Anspruch 1 oder 2, wobei zumindest ein Diisocyanat aus der Gruppe "Diphenylmethan-4,4'-diisocyanat, Toluylendiisocyanat" eingesetzt wird.

4. Verfahren nach einem der Ansprüche 1 bis 3, wobei der Polyurethan-Ausgangsstoff in Granulatform eingesetzt wird.

5. Verfahren nach Anspruch 4, wobei das Diisocyanat dem noch nicht schmelzflüssigen granulatförmigen PoJyurethan-Ausgangsstoff zugesetzt wird.

6. Verfahren nach einem der Ansprüche 1 bis 5, wobei das Diisocyanat dem Polyurethan-Ausgangsstoff in einem Schneckenextruder zugegeben wird.

7. Verfahren nach einem der Ansprüche 1 bis 6, wobei Längskantenabschnitte (4, 5) des Kunststoffstreifens (2) durch Einbringen eines schmelzflüssigen Zusatzkunststoffes (8) stoffschlüssig miteinander verschweißt werden.

8. Verfahren nach Anspruch 7, wobei der schmelzflüssige Zusatzkunststoff (8) ebenfalls aus einem Polyurethan-Ausgangsstoff und zumindest einem zugegebenen Diisocyanat erhalten wird.

9. Verfahren nach einem der Ansprüche 1 bis 8, wobei ein Kunststoffstreifen (2) mit einer Armierung (3) wendelförmig zu dem Wickelschlauch (1) gewickelt wird.

## Claims

1. A method for producing a coiled tube (1) made from polyurethane, wherein
- at least one diisocyanate is added to a thermoplastic polyurethane source material,
- a plastic strip (2) is extruded from the polyurethane modified in this way and
- the extruded plastic strip (2) is wound in a coiled fashion into a coiled tube (1).

2. The method according to claim 1, wherein the diisocyanate is added to the polyurethane based on the mass of the polyurethane source material in a quantity of 0.2 to 10 % by wt., advantageously 0.3 to 4 % by wt., preferably 0.5 to 3.5 % by wt..

3. The method according to claim 1 or 2, wherein at least one diisocyanate from the group "diphenylmethane-4,4'-diiosocyanate, toluene diisocyanate" is used.

4. The method according to one of the claims 1 to 3, wherein the polyurethane source material is used in granular form.

5. The method according to claim 4, wherein the diisocyanate is added to the granular polyurethane source material that has not yet melted.

6. The method according to one of the claims 1 to 5, wherein the diisocyanate is added to the polyurethane source material in a screw extruder.

7. The method according to one of the claims 1 to 6, wherein longitudinal edge sections (4, 5) of the plastic strip (2) are heat-sealed together by introducing a fusible additional plastic (8).

8. The method according to claim 7, wherein the fusible additional plastic (8) is likewise obtained from a polyurethane source material and at least one added diisocyanate.

9. The method according to one of the claims 1 to 8, wherein a plastic strip (2) is wound with reinforcement (3) in a coiled fashion into the coiled tube (1).

## Revendications

1. Procédé de fabrication d'un tuyau spiralé (1) en polyuréthane, consistant à
- ajouter au moins un diisocyanate à une matière de départ de type polyuréthane thermoplastique,
- pour produire, par l'extrusion du polyuréthane ainsi modifié, une bande en matière plastique (2), et
- enrouler ladite bande en matière plastique ainsi extrudée (2) en forme d'une spirale pour obtenir un tuyau spiralé (1).

2. Procédé selon la revendication 1, ledit diisocyanate étant ajouté audit polyuréthane dans une quantité comprise entre 0,2 et 10 % en poids, avantageusement entre 0,2 et 5 % en poids, préférentiellement entre 0,3 et 4 % en poids, de préférence entre 0,5 et 3,5 % en poids, par rapport au poids de ladite matière de départ de type polyuréthane.

3. Procédé selon la revendication 1 ou 2, au moins un diisocyanate choisi dans le groupe « 4,4'-diisocyanate de diphénylméthan, diisocyanate de toluylène » étant mis en oeuvre.

4. Procédé selon l'une des revendications 1 à 3, ladite matière de départ de type polyuréthane étant mis en oeuvre sous forme de granulés.

5. Procédé selon la revendication 4, ledit diisocyanate étant ajouté auxdits granulés de ladite matière de départ de type polyuréthane avant que celle-ci n'entre en fusion.

6. Procédé selon l'une des revendications 1 à 5, ledit diisocyanate étant ajouté à ladite matière de départ de type polyuréthane dans une extrudeuse à vis.

7. Procédé selon l'une des revendications 1 à 6, des sections des bords longitudinaux (4, 5) de ladite bande en matière plastique (2) étant soudées les unes aux autres par l'introduction d'une matière plastique supplémentaire (8) en fusion, ledit soudage faisant l'étanchéité.

8. Procédé selon la revendication 7, ladite matière plastique supplémentaire (8) en fusion étant également obtenue à partir de ladite matière de départ de type polyuréthane et d'au moins un diisocyanate ajouté.

9. Procédé selon l'une des revendications 1 à 8, une bande en matière plastique (2) étant enroulée en forme de spirale avec une armature (3) pour obtenir un tuyau spiralé (1).
